# EUROPÄISCHE PATENTANMELDUNG

(11) **EP 1 956 264 A1**
(43) Veröffentlichungstag der Anmeldung: **13.08.2008**
(21) Anmeldenummer: 08000886.5
(22) Anmeldetag: 18.01.2008
(51) Int. Cl.: F16F 15/134, F16F 15/123, F16F 15/133, F16F 15/121

(54) **Torsionsschwingungsdämpfer**

(30) Priorität: 08.02.2007 DE 102007006272
(71) Anmelder: LuK Lamellen und Kupplungsbau Beteiligungs KG, 77815 Bühl (DE)
(72) Erfinder: Junker, Uli, 77652 Offenburg (DE); Mende, Hartmut, 77815 Bühl (DE); Bosse, Michael, 76547 Sinzheim (DE)

(57) **Zusammenfassung**

Torsionsschwingungsdämpfer (1) mit einem antriebsseitigen und einem abtriebsseitigen Übertragungselement (2,4), die entgegen einer zwischen diesen vorgesehenen Dämpfungseinrichtung mit in Umfangsrichtung wirksamen Energiespeichern (16) zueinander verdrehbar sind.

## Beschreibung

Die Erfindung betrifft einen Torsionsschwingungsdämpfer mit einem antriebsseitigen Übertragungselement und einem abtriebsseitigen Übertragungselement, die entgegen einer zwischen diesen vorgesehenen Dämpfungseinrichtung mit in Umfangsrichtung wirksamen Energiespeichern zueinander verdrehbar sind. Die Übertragungselemente besitzen dabei jeweils Abstütz- bzw. Beaufschlagungsbereiche für die Energiespeicher, und es sind zusätzlich zwischen den beiden Übertragungselementen Mittel zur Begrenzung der Relativverdrehung sowohl in Schub- als auch in Zugrichtung vorgesehen, welche parallel zu den Energiespeichern geschaltet sind und somit diese Energiespeicher gegen eine Überbeanspruchung infolge von sehr hohen Drehmomentspitzen (Impact-Momente) schützen.

Prinzipiell sind Torsionsschwingungsdämpfer beispielsweise durch die DE 199 12 970 A1, DE 199 09 044 A1, DE 196 48 342 A1, DE 196 03 248 A1 und DE 41 17 584 A1 bekannt geworden. Es wird daher bezüglich des prinzipiellen Aufbaus und der prinzipiellen Wirkungsweise derartiger Torsionsschwingungsdämpfer auf diesen Stand und den noch im Folgenden zitierten Stand der Technik verwiesen, so dass diesbezüglich auf eine umfassende Beschreibung in der vorliegenden Anmeldung verzichtet wird.

Der vorliegenden Anmeldung lag die Aufgabe zugrunde, Torsionsschwingungsdämpfer der eingangs genannten Art bezüglich ihres Aufbaus und ihrer Funktion zu verbessern. Insbesondere ist ein Ziel der vorliegenden Erfindung die zwischen den beiden Übertragungselementen wirksame Dämpfungseinrichtung, insbesondere die Energiespeicher, vor Überbelastungen zu schützen. Weiterhin soll ein gemäß der vorliegenden Erfindung ausgestalteter Torsionsschwingungsdämpfer in besonders einfacher und kostengünstiger Weise herstellbar sein und auch eine große Variationsmöglichkeit bezüglich der realisierbaren Dämpfungscharakteristiken insbesondere im Endbereich der zwischen den beiden Übertragungselementen maximal möglichen Verdrehwinkel gewährleisten.

Gemäß der vorliegenden Erfindung wird dies unter anderem dadurch erzielt, dass radial innerhalb und/oder radial außerhalb der Energiespeicher wenigstens ein energieabsorbierendes, zwischen an den Übertragungselementen vorgesehenen Abstützbereichen einspannbares Begrenzungselement vorgesehen ist, welches gegenüber beiden Übertragungselementen begrenzt verdrehbar ist und zur Begrenzung der durch die Dämpfungseinrichtung ermöglichten Relativverdrehung zwischen den Übertragungselementen dient. Bei Anordnung mehrerer über den Umfang des Torsionsschwingungsdämpfers angeordneter, parallel wirksamer Energiespeicher ist es zweckmäßig, wenn jedem Energiespeicher zumindest ein Begrenzungselement zugeordnet ist.

Insbesondere bei Verwendung von langen Energiespeichern, die zumindest annähernd auf ihren Einbauradius vorgekrümmt sind, kann es zweckmäßig sein, wenn auch die Begrenzungselemente in Umfangsrichtung gekrümmt und länglich ausgebildet sind. Bei Verwendung von Schraubendruckfedern zur Bildung der Energiespeicher können sich die radial innerhalb der Energiespeicher vorgesehenen Begrenzungselemente an den Windungen wenigstens einer Schraubendruckfeder radial abstützen. Die auf die Begrenzungselemente einwirkenden Fliehkräfte können somit mittels der Schraubendruckfedern radial abgestützt werden.

Besonders vorteilhaft kann es sein, um große Verdrehwinkel zwischen den Übertragungselementen zu realisieren, wenn lediglich zwei in Umfangsrichtung sich erstreckende Energiespeicher vorgesehen sind, denen jeweils mindestens ein Begrenzungselement zugeordnet ist.

Die längenmäßige Auslegung der Begrenzungselemente ist dabei in vorteilhafter Weise derart gestaltet, dass diese Begrenzungselemente vor Erreichen der Belastungsgrenze der Energiespeicher zur Wirkung kommen. Dadurch wird eine Überbeanspruchung der Energiespeicher vermieden, da mittels der Begrenzungselemente die schädlichen Übermomente bzw. die Momentenspitzen absorbiert werden. Die Wirkung der Begrenzungselemente setzt also kurz vor dem auf Block gehen des Energiespeichers zwischen den beiden Übertragungselementen ein. Im vorliegenden Falle ist unter dem Ausdruck auf Block gehen des Energiespeichers der maximal zulässige Komprimierungszustand des Energiespeichers gemeint. Bei einer normalen Schraubendruckfeder entspricht der Blockzustand praktisch demjenigen Zustand, in dem zumindest Bereiche der Federwindungen aneinander liegen und somit eine weitere Komprimierung ohne plastische Deformation des Federdrahtes nicht mehr möglich ist. Es gibt jedoch auch Schraubendruckfedern, bei denen die einander benachbarten Windungen derart ausgestaltet sind, dass auch bei Kontakt zwischen den einzelnen Windungen durch Aufeinandergleiten zumindest einiger benachbarter Windungen ein Restkompressionsweg ermöglicht wird, und zwar bis zur zulässigen Belastungsgrenze der entsprechenden Schraubendruckfeder. Würde eine so ausgestaltete Schraubendruckfeder zusätzlich komprimiert, so würden sich entweder einzelne Windungen bleibend aufweiten bzw. die Feder Schaden nehmen und somit nicht mehr die ihr zugedachte Funktion voll übernehmen können. Um dies zu vermeiden, können die erfindungsgemäßen Begrenzungselemente eingesetzt werden. Federn, die, obwohl deren Windungen sich bereits berühren, noch einen Restkompressionsweg besitzen, sind beispielsweise in der WO 99/49234 beschrieben.

Besonders vorteilhaft kann es sein, wenn die Begrenzungselemente eine Verdrehsteifigkeit erzeugen in der Größenordnung von 300 bis 2000 Nm/°, vorzugsweise in der Größenordnung von 700 bis 1800 Nm/°. Dadurch können mit einem verhältnismäßig geringen Verformungswinkel der Begrenzungselemente sehr hohe Spitzenmomente, die ein Vielfaches des Nominaldrehmomentes einer Brennkraftmaschine betragen, absorbiert werden. Die aufgrund von bestimmten Betriebsbedingungen des Kraftfahrzeuges bzw. der Brennkraftmaschine auftretenden Spitzenmomente (Impact-Momente) können wenigstens in der Größenordnung zwischen 2000 und 4000 Nm liegen und teilweise auch noch größer sein.

Erfindungsgemäß sollen also zumindest über einen geringen Relatiwerdrehwinkel zwischen den Übertragungselementen die Energiespeicher, die vorzugsweise aus Schraubendruckfedern bestehen, und die Begrenzungselemente gleichzeitig eine elastische Verformung erfahren. Dabei soll innerhalb dieses geringen Relativverdrehwinkels auch ein hohes Potential an Energievernichtung durch zum Beispiel innere Reibung bzw. Hysterese zumindest des die Begrenzungselemente bildenden Werkstoffes vorhanden sein. Der Verdrehwinkel, innerhalb dessen die Begrenzungselemente wirksam werden, kann in der Größenordnung von 1 bis 12° liegen. Zweckmäßig ist es, wenn dieser Verdrehwinkel zwischen 1 und 6° beträgt.

Falls notwendig, kann nach Erreichen des maximal zulässigen Verformungsgrades der Begrenzungselemente ein zusätzlicher starrer Anschlag, zum Beispiel metallischer Anschlag, zwischen den Übertragungselementen zur Wirkung kommen.

Wie bereits angedeutet, ist es zweckmäßig, wenn die Energiespeicher jeweils durch wenigstens eine Schraubendruckfeder gebildet sind und zumindest über einen Teilbereich des vorerwähnten geringen Verdrehwinkels, innerhalb dessen die Begrenzungselemente verformt werden, die Windungen der Schraubendruckfeder sich bereits berühren, jedoch durch Aufeinandergleiten der Windungen ein weiterer geringer Kompressionsweg der Feder ermöglicht ist. Durch das Aufeinandergleiten der Windungen wird Reibung erzeugt, die ebenfalls zur Vernichtung der überschüssigen Anschlagenergie erheblich beiträgt.

In vorteilhafter Weise kann der Energiespeicher durch zumindest zwei Schraubendruckfedern, nämlich einer äußeren und einer inneren Schraubendruckfeder, gebildet sein, wobei eine dieser Schraubendruckfedern den weiteren, durch Aufeinandergleiten der Windungen ermöglichten Kompressionsweg aufweist, und die andere Feder bei auf Block gehen der Windungen eine praktisch feste Blocklänge besitzt. Mittels der eine praktisch feste Blocklänge aufweisenden Schraubendruckfeder wird die Relativverdrehung zwischen den Übertragungselementen endgültig begrenzt, wobei diese Begrenzung vorzugsweise innerhalb des vorerwähnten weiteren geringen Kompressionsweges der einen Feder erfolgt. Dadurch wird gewährleistet, dass die Belastungsgrenze der weiteren Schraubendruckfeder nicht überschritten wird.

In vorteilhafter Weise kann die Innenfeder eine feste Blocklänge aufweisen.

Besonders zweckmäßig kann es sein, wenn die Begrenzungselemente zumindest teilweise aus Kunststoff bestehen. Dieser Kunststoff kann beispielsweise aus einem Thermoplast, Duroplast oder einem Elastomer bestehen. Zweckmäßig kann es auch sein, wenn die Begrenzungselemente aus einer Kombination derartiger Kunststoffe bestehen, zum Beispiel Thermoplast und Elastomer. Vorzugsweise wird Kunststoff eingesetzt, der auch bei verhältnismäßig hohen Temperaturen gute mechanische Eigenschaften aufweist. Die verwendeten Materialien sollten dabei zumindest einer Temperatur von 160° Celsius, vorzugsweise einer Temperatur von > 200° Celsius standhalten. Bezüglich der Eigenschaften derartiger Kunststoffe wird auf das "Kraftfahrzeugtechnisches Taschenbuch, Düsseldorf, VDI-Verlag, 1995 (ISBN 3-18-419122-2)", Seiten 215 bis 221 verwiesen.

Die elastische Verformbarkeit bzw. Nachgiebigkeit der Begrenzungselemente kann durch entsprechende Formgebung und/oder durch entsprechende Auswahl des diese bildenden Werkstoffes an den jeweiligen Einsatzfall angepasst werden. So können beispielsweise zur Veränderung bzw. Anpassung der Elastizität in die entsprechenden Begrenzungselemente Schlitze oder Ausnehmungen eingebracht werden. Weiterhin kann mindestens eine Reibeinrichtung vorgesehen werden, die ein hohes Reibmoment erzeugt und zumindest im Endbereich des möglichen Kompressionsweges der Energiespeicher einsetzt. Eine solche Reibeinrichtung kann dabei auch derart ausgestaltet sein, dass deren Reibwirkung mit größer werdendem Verdrehwinkel zwischen den Übertragungselementen zunimmt, also ansteigt.

Bei Verwendung wenigstens zweier über den Umfang verteilt vorgesehener Begrenzungselemente kann es besonders vorteilhaft sein, wenn diese miteinander drehgekoppelt sind. Diese Drehkoppelung kann beispielsweise mittels wenigstens eines ringartigen Bauteils erfolgen. Durch die antriebsmäßige Verbindung zwischen den einzelnen Begrenzungselementen können diese synchrone Bewegungsabläufe durchführen. Dadurch kann das Entstehen von Unwucht zumindest reduziert werden. Bei Verwendung zweier Begrenzungselemente sind diese vorzugsweise diametral gegenüberliegend angeordnet.

Zur Vermeidung von einer durch die Begrenzungselemente erzeugten, drehzahlabhängigen Reibungsdämpfung kann es zweckmäßig sein, wenn die über den Umfang verteilten Begrenzungselemente untereinander fliehkraftmäßig abgestützt sind. Diese Abstützung kann mittels des wenigstens einen ringförmigen Bauteils erfolgen. Das ringförmige Bauteil ist dabei derart mit den Begrenzungselementen verbunden, dass sowohl eine Drehkoppelung als auch eine fliehkraftmäßige Verbindung bzw. Abstützung gegeben ist.

In vorteilhafter Weise können die Begrenzungselemente Bestandteil einer Reibeinrichtung bzw. Hystereseeinrichtung sein. Dabei können die Begrenzungselemente gleichzeitig als Reibelement dienen. Hierfür kann wenigstens ein Begrenzungselement zur Erzeugung einer Reibungsdämpfung zumindest in axialer Richtung kraftbeaufschlagt sein.

In vorteilhafter Weise kann der Torsionsschwingungsdämpfer Bestandteil eines zumindest zwei zueinander verdrehbare Massen aufweisenden Schwungrades sein, wobei die Übertragungselemente jeweils zumindest Bestandteil einer der beiden Massen oder wenigstens mit einer solchen drehverbunden sein können.

In vorteilhafter Weise kann eines der Übertragungselemente durch wenigstens zwei axial beabstandete Seitenwandungen, die radial außen miteinander verbunden sind, und das andere Übertragungselement durch wenigstens ein zwischen diesen beiden Seitenwandungen angeordnetes, flanschartiges Bauteil gebildet sein. Dabei kann in vorteilhafter Weise das antriebsseitige Übertragungselement die beiden Seitenwandungen aufweisen und das abtriebsseitige Übertragungselement das flanschartige Bauteil besitzen. Die bereits erwähnte fliehkraftmäßige Abstützung der Begrenzungselemente kann dabei in vorteilhafter Weise an wenigstens einer der Seitenwandungen und/oder am flanschartigen Bauteil erfolgen.

Die den Torsionsschwingungsdämpfer bildenden Bauteile können in vorteilhafter Weise eine ringförmige Kammer bilden, welche die Energiespeicher aufnimmt und zumindest teilweise mit einem viskosen Medium gefüllt sein kann. Die Begrenzungselemente können in Umfangsrichtung des Torsionsschwingungsdämpfers sich erstreckende Ansätze besitzen, welche die Kammer zumindest teilweise radial innerhalb der Energiespeicher abdichten.

In vorteilhafter Weise können die Energiespeicher als langhubige Energiespeicher ausgebildet sein, welche zumindest einen Verdrehwinkel von 40°, ausgehend von einer Ruhestellung des Torsionsdämpfers, in Zug- und/oder Schubrichtung ermöglichen. Die Energiespeicher können dabei ein Verhältnis von Länge zu Außendurchmesser in der Größenordnung von 6 bis 20 aufweisen. Die durch die Energiespeicher erzeugte Verdrehsteifigkeit kann in vorteilhafter Weise zumindest bei Beginn deren Komprimierung in der Größenordnung von 1 bis 8 Nm/° liegen, zum Beispiel 4 Nm/°. Mit zunehmendem Kompressionsweg kann die Verdrehsteifigkeit jedoch auch größer werden. Die Energiespeicher können in vorteilhafter Weise durch Schraubenfedern gebildet sein, die komprimierbar und/oder auf Zug beanspruchbar sind. Die die Energiespeicher bildenden Federn können als langhubige, einstücke Schraubendruckfedern ausgebildet sein. Diese Federn können jedoch auch aus wenigstens zwei in Umfangsrichtung hintereinander vorgesehenen Schraubendruckfedern gebildet sein. Weiterhin ist es möglich, verschiedene Schraubendruckfedern axial ineinander geschachtelt vorzusehen. Dabei können die inneren Federn gegenüber den diese umgebenden äußeren Federn über einen geringeren Verdrehwinkel wirksam sein. Das Wickelverhältnis der inneren und äußeren Federn kann dabei derart aufeinander abgestimmt sein, dass die inneren und äußeren Federn zumindest annähernd gleichzeitig ihren maximalen Kompressionsweg erreichen bzw. auf Block gehen.

Weitere Vorteile sowohl konstruktiver als auch funktioneller Art werden im Zusammenhang mit der folgenden Figurenbeschreibung näher erläutert.

Dabei zeigen:
- Figur 1: eine Teilansicht eines erfindungsgemäß ausgebildeten Torsionsschwingungs-dämpfers,
- Figur 2: einen Schnitt gemäß der Linie II-II der Figur 1,
- Figur 3: Einzelteile einer Reibeinrichtung, bestehend aus zumindest zwei Begrenzungs-elementen und einem Verbindungsring,
- Figur 4: die Einzelteile gemäß Figur 3 im zusammengebauten Zustand,
- Figur 5: eine alternative Ausgestaltungsform eines Torsionsschwingungsdämpfers in Teilansicht,
- Figur 6: einen Schnitt gemäß der Linie VI-VI der Figur 5, die
- Fig. 7 und 8: Einzelheiten verschiedener Bauteile, die zur Begrenzung des Verdrehwinkels und zur Erzeugung einer Reibung zwischen den zueinander verdrehbaren Antriebselementen dienen und bei der Ausführungsform gemäß den Figuren 5 und 6 verbaut sind,
- Figur 9: eine weitere Ausgestaltungsmöglichkeit eines erfindungsgemäß ausgebildeten Torsionsschwingungsdämpfers und die
- Figuren 10 bis 13: Schnitte durch verschiedene Ausgestaltungsmöglichkeiten erfindungsgemäßer Torsionsschwingungsdämpfer, welche parallel zu den Energiespeichern wirksame Begrenzungselemente aufweisen.

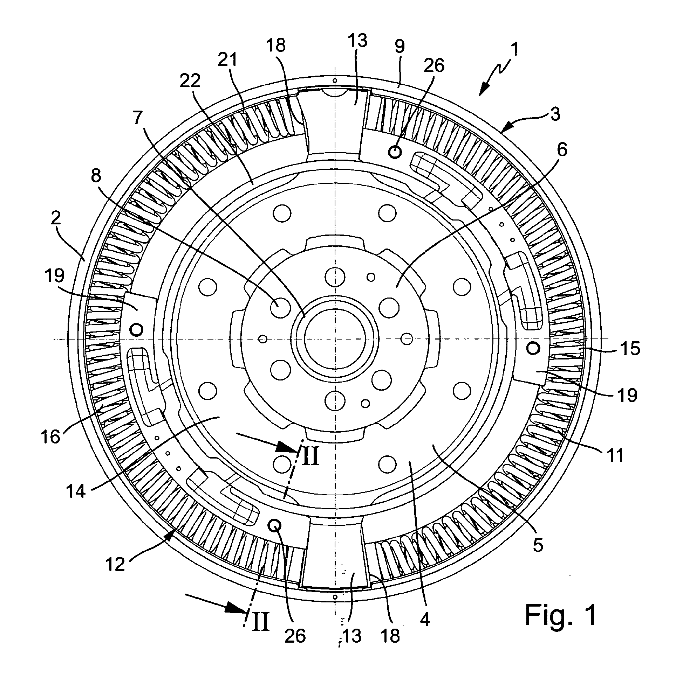

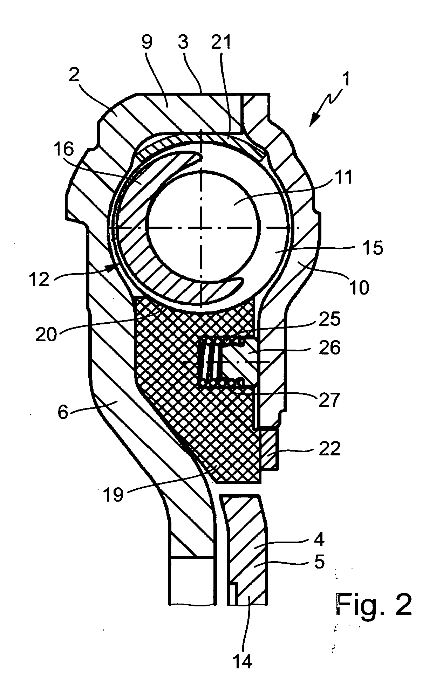

Der in den Figuren 1 und 2 dargestellte Torsionsschwingungsdämpfer 1, der hier nur teilweise dargestellt ist, besitzt ein antriebsseitiges Übertragungselement 2, das hier eine antriebsseitige Schwungmasse 3 umfasst sowie ein abtriebsseitiges Übertragungselement 4, das zumindest das flanschartige Bauteil 5 umfasst, welches Bestandteil einer abtriebsseitigen Schwungmasse sein kann bzw. mit einer derartigen abtriebsseitigen Schwungmasse antriebsmäßig verbunden sein kann.

Der Torsionsschwingungsdämpfer 1 kann somit Bestandteil eines so genannten Zweimassenschwungrades sein bzw. ein solches Zweimassenschwungrad bilden. Derartige Zweimassenschwungräder sind bezüglich ihres grundsätzlichen Aufbaus und ihrer allgemeinen Wirkungsweise beispielsweise in folgenden Veröffentlichungen näher beschrieben. DE 197 28 422 A1, DE 196 03 248 A1, DE 195 22 718 A1, DE 41 17 582 A1, DE 41 17 581 A1, DE 41 17 579 A1, DE 44 06 826 A1, DE 199 09 044 A1 und WO 99/49234.

Insbesondere Energiespeicher bzw. Schraubendruckfedern, wie sie in der WO 99/49234 beschrieben sind, eignen sich in besonders vorteilhafter Weise zur Verwendung bei dem erfindungsgemäßen Torsionsschwingungsdämpfer. Derartige Schraubendruckfedern haben den Vorteil, dass bei Berührung der Federwindungen, also praktisch bei auf Block gehen der Feder, noch ein Resthub bzw. Restfederweg durch Aufeinandergleiten der einander anliegenden Windungsbereiche von sich bereits berührenden Windungen ermöglicht ist. Die sich dadurch ergebenden Vorteile sind in dieser Schrift näher beschrieben.

Die antriebsseitige Schwungmasse 3 besitzt einen Antriebsflansch 6, der, wie aus Figur 1 zu entnehmen ist, an seinem radial innen liegenden Bereich einen hülsenförmigen axialen Ansatz 7 trägt bzw. aufweist, auf dem, wie aus dem vorerwähnten Stand der Technik bekannt ist, eine abtriebsseitige Schwungmasse verdrehbar gelagert aufgenommen werden kann. In vorteilhafter Weise kann die hierfür erforderliche Lagerung durch eine Gleitlagerung gebildet sein, die beispielsweise entsprechend der DE 198 34 728 A1 oder der DE 198 34 729 A1 ausgebildet sein kann.

Zur Befestigung des Antriebsflansches 6 an der Antriebswelle einer Brennkraftmaschine sind radial außerhalb des Ansatzes 7 und somit auch der radialen Lagerung zwischen den beiden Schwungmassen Verschraubungsöffnungen 8 im Antriebsflansch 6 vorgesehen.

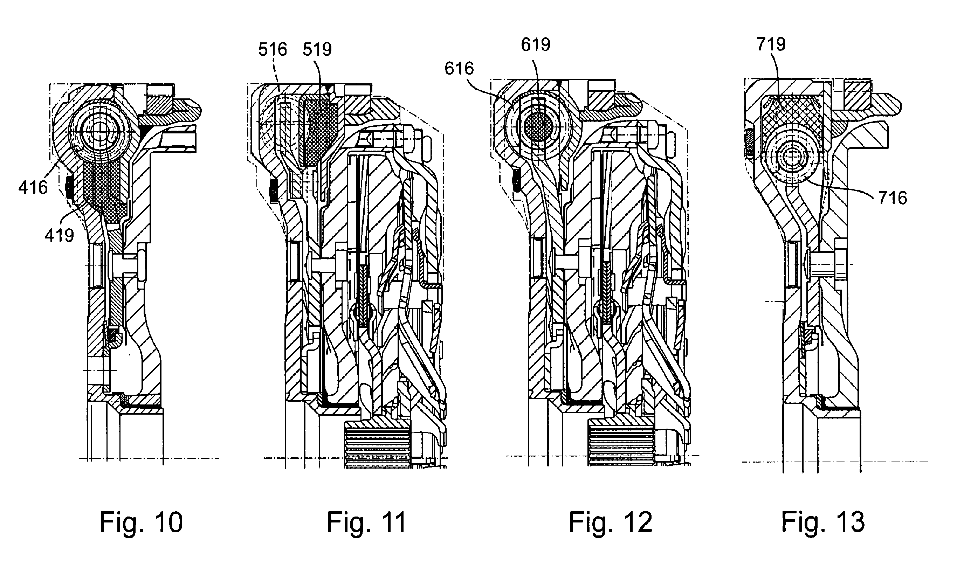

Der Antriebsflansch 6 trägt radial außen einen axialen Ansatz 9, der hier einstückig ausgebildet ist und einen Anlasserzahnkranz aufnehmen kann. Am axialen Ansatz 9 ist eine Deckplatte 10 befestigt, die sich radial nach innen hin erstreckt und der hier nicht dargestellten abtriebsseitigen Schwungmasse axial benachbart ist, wie dies aus dem vorerwähnten Stand der Technik bekannt ist oder aus den Figuren 10 bis 13 hervorgeht. Der radiale Antriebsflansch 6, der axiale Ansatz 9 und die Deckplatte 10 begrenzen einen ringförmigen Raum 11, der in vorteilhafter Weise zumindest teilweise mit einem viskosen Medium, wie zum Beispiel Fett, gefüllt sein kann. In dem ringförmigen Raum 11 ist eine Dämpfungseinrichtung 12 angeordnet.

In den ringförmigen Raum 11 greifen zumindest radiale Flügel bzw. Ausleger 13 eines Flansches 14 ein. Der Flansch 14 ist mit radial innen liegenden Bereichen an einer abtriebsseitigen Schwungmasse befestigbar, zum Beispiel mittels Nietverbindungen, wie dies in den Figuren 10 bis 13 dargestellt ist.

Das abtriebsseitige Übertragungselement 4 bzw. die mit diesem verbundene Schwungmasse ist in an sich bekannter Weise über eine nicht näher dargestellte Reibungskupplung, deren Kupplungsscheibe auf einer Getriebeeingangswelle aufnehmbar ist, mit einem Getriebe verbindbar (siehe auch Figuren 11 und 12).

Figur 1 zeigt die winkelmäßige Position verschiedener Bauteile des Torsionsschwingungsdämpfers 1 im nicht beanspruchten Zustand der durch Schraubendruckfedern 15 gebildeten Energiespeicher 16. Die Energiespeicher 16 können jeweils nur durch eine Schraubendruckfeder 15 gebildet sein, die in vorteilhafter Weise im radial äußeren Bereich des ringförmigen Raumes 11 aufgenommen sein können. Als Energiespeicher 16 können jedoch auch zumindest zwei Federn zum Einsatz kommen, die ineinander geschachtelt sind. So kann beispielsweise innerhalb des durch die Windungen der Schraubendruckfeder 15 gebildeten Raumes wenigstens eine weitere Schraubendruckfeder aufgenommen sein. Für manche Anwendungsfälle können auch mehrere, zum Beispiel zwei Schraubendruckfedern innerhalb der Schraubendruckfeder 15 vorgesehen werden, welche in Reihe geschaltet sind. Ein langer Energiespeicher 16 kann jedoch auch aus einer Mehrzahl von hintereinander bzw. in Reihe geschalteten Schraubendruckfedern gebildet sein. Dabei können zumindest einige der in Reihe geschalteten Einzelfedern aus wenigstens zwei ineinander geschachtelten Schraubendruckfedern bestehen. Besonders zweckmäßig kann es dabei sein, wenn zwischen benachbarten Einzelfedern ein Zwischenstück vorgesehen ist. Derartige Zwischenstücke sind beispielsweise durch die DE 41 24 614 A1 und die DE 41 28 868 A1 bekannt geworden.

Bei dem in Figur 1 dargestellten Ausführungsbeispiel sind zwei Energiespeicher 16 vorgesehen, die diametral gegenüber liegend angeordnet sind und sich ca. über 150 Winkelgrad erstrecken. Zweckmäßig ist es, wenn diese winkelmäßige Erstreckung der Energiespeicher 16 in der Größenordnung von 90° bis 160° liegt.

In dem in Figur 1 dargestellten Ruhezustand des Torsionsschwingungsdämpfers 1 befinden sich die Ausleger 13 des Flansches 14 axial zwischen Abstütz- bzw. Beaufschlagungsbereichen 18, die von den Bauteilen 6 und 10 getragen sind. Diese Abstütz- bzw. Beaufschlagungsbereiche können in vorteilhafter Weise durch in die Bauteile 6 und 10 eingebrachte Anformungen in Form von Anprägungen gebildet sein, wie dies aus dem vorerwähnten Stand der Technik bekannt ist.

Bei dem dargestellten Ausführungsbeispiel ist radial innerhalb der durch bogenförmige Schraubenfedern 15 gebildeten Energiespeicher 16 jeweils zumindest ein Begrenzungselement 19 vorgesehen, mittels dessen die Relativverdrehung zwischen dem abtriebsseitigen Übertragungselement 4 und dem antriebsseitigen Übertragungselement 2 begrenzbar ist. Die Begrenzungselemente 19 sind ebenfalls bogenförmig bzw. segmentförmig ausgebildet und in Umfangsrichtung gegenüber beiden Übertragungselementen 2 und 4 verdrehbar. Die Begrenzung der Relativverdrehung zwischen den beiden Übertragungselementen 2 und 4 erfolgt, indem die Begrenzungselemente 19 umfangsmäßig zwischen Bereichen der radialen Ausleger 13 des Flansches 14 und den Abstütz- bzw. Beaufschlagungsbereichen 18 der Bauteile 6 und 10 eingespannt werden. Diese Einspannung erfolgt, nachdem die Schraubendruckfedern 15 infolge einer Relativverdrehung zwischen den beiden Übertragungselementen 2 und 4 komprimiert wurden.

Die Begrenzungselemente 19 sind vorzugsweise zumindest teilweise aus einem eine hohe Dämpfungskapazität bzw. ein hohes Energieabsorptionsvermögen aufweisenden Kunststoff hergestellt, der vorzugsweise auch eine hohe Verformungshysterese besitzt. Als Kunststoff kann beispielsweise ein Thermoplast oder ein Duroplast oder aber ein Elastomer eingesetzt werden. Zweckmäßig kann es auch sein, wenn die Begrenzungselemente aus einer Kombination derartiger Kunststoffe besteht, zum Beispiel Thermoplast und Elastomer. Vorzugsweise wird ein Kunststoff eingesetzt, der bei verhältnismäßig hohen Temperaturen gute mechanische Eigenschaften aufweist. Die verwendeten Materialien sollten zumindest einer Temperatur von 160° Celsius, vorzugsweise einer Temperatur von > 200° Celsius standhalten. Bezüglich der Eigenschaften derartiger Kunststoffe wird auf das "Kraftfahrzeugtechnisches Taschenbuch, Düsseldorf, VDI-Verlag 1995 (ISBN 3-18-419122-2)", Seiten 215 bis 221 verwiesen. Es ist also darauf zu achten, dass der eingesetzte Kunststoff eine ausreichende Verschleißfestigkeit und auch die erforderlichen mechanischen Eigenschaften, insbesondere bezüglich der Temperaturbeständigkeit, der Druckfestigkeit und des eventuell gewünschten elastischen Verformungspotentials aufweist. Dies kann durch entsprechende Formgebung der Begrenzungselemente 19 angepasst bzw. moduliert werden.

Die Begrenzungselemente 19 sind vorzugsweise in Bezug auf die einzelnen Energiespeicher 16 derart angeordnet, dass keine Unwucht innerhalb des Torsionsschwingungsdämpfers 1 entsteht.

Für manche Anwendungsfälle kann es zweckmäßig sein, wenn sich die eine Drehdämpfung bewirkenden Begrenzungselemente 19 unter Fliehkrafteinwirkung an den inneren Bereichen der Energiespeicher 16 bzw. an den Windungsbereichen der Schraubendruckfedern 15 abstützen und entlang der Energiespeicher 16 verschiebbar sind. Aus Figur 2 ist ersichtlich, dass hierfür die Begrenzungselemente 19 radial außen einen an den Querschnitt der Energiespeicher 16 im Wesentlichen angepassten Bereich 20 besitzen, so dass eine flächige bzw. zumindest linienförmige Abstützung zwischen den Windungen einer Schraubendruckfeder 15 und den Begrenzungselementen 19 vorhanden ist. Die Energiespeicher 16 werden fliehkraftmäßig durch den axialen Ansatz 9 abgestützt, und zwar hier unter Zwischenlegung eines Verschleißschutzes 21.

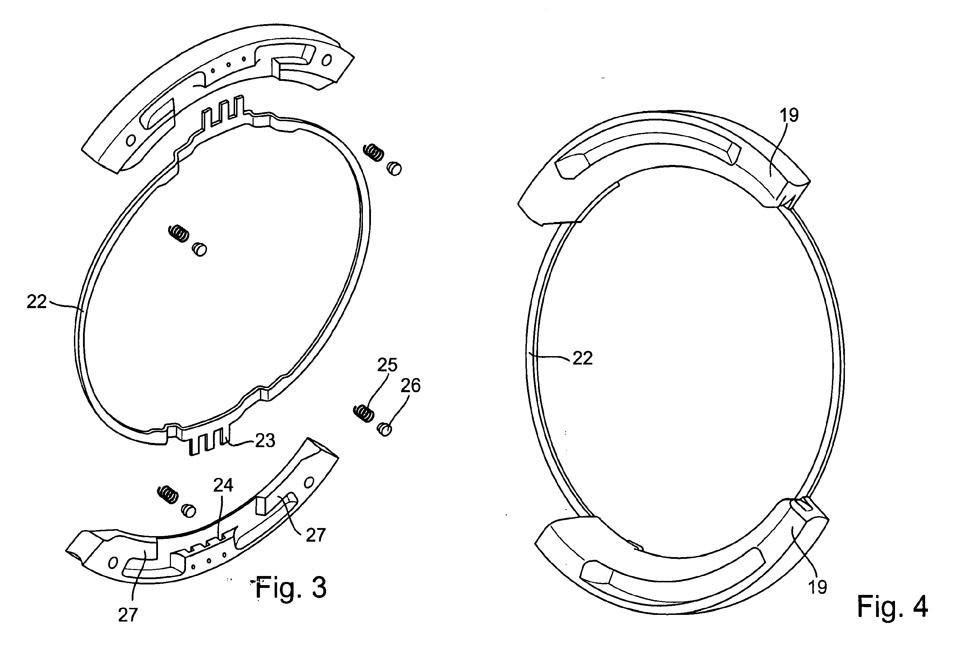

Um zu vermeiden, dass innerhalb des Torsionsschwingungsdämpfers 1 eine Unwucht auftritt, ist es zweckmäßig, wenn die sich gegenüber liegenden Begrenzungselemente 19 miteinander drehgekoppelt sind, so dass diese stets gleichzeitig bzw. synchron umfangsmäßig bewegt werden. Hierfür kann, wie dies aus Figur 1 und insbesondere Figur 3 erkennbar ist, ein ringförmiges Bauteil 22 Verwendung finden, das zum Beispiel über eine formschlüssige Verbindung mit den Begrenzungselementen 19 drehgekoppelt ist. Bei dem dargestellten Ausführungsbeispiel erfolgt diese drehschlüssige Verbindung mittels einer radialen Steckverbindung zwischen den Begrenzungselementen 19 und dem ringförmigen Bauteil 22. Die Ausgestaltung dieser radialen Steckverbindung ist aus Figur 3 zu entnehmen. Bei dem dargestellten Ausführungsbeispiel wird eine derartige Steckverbindung unter anderem durch am Außenumfang des ringförmigen Bauteils vorgesehene radiale Zungen 23, die in entsprechende radiale Ausnehmungen 24 der Begrenzungselemente 19 einschiebbar sind, gebildet.

In vorteilhafter Weise kann zwischen dem ringförmigen Bauteil 22 und den Abstützelementen 19 auch eine Verbindung vorgesehen werden, welche einen radialen Zusammenhalt dieser Bauteile 22, 19 gewährleistet. Dadurch können die bei Rotation des Torsionsschwingungsdämpfers 1 auf die Begrenzungselemente 19 einwirkenden Fliehkräfte zumindest teilweise abgefangen werden. Bei einer derartigen Ausgestaltung bräuchten die Begrenzungselemente 19 nicht über die Energiespeicher 16 radial abgestützt werden, wie dies in Figur 2 dargestellt ist. Hierfür muss das ringförmige Bauteil 22 entsprechend solide ausgebildet werden. Sofern das Bauteil 22 eine gewisse radiale Elastizität besitzt, kann dadurch auch gewährleistet werden, dass lediglich ein Teil der auf die Begrenzungselemente 19 einwirkenden Fliehkräfte über die Energiespeicher 16 abgefangen werden muss. Alternativ kann eine radiale Abstützung der Begrenzungselemente 19 auch mittels einer formschlüssigen Abstützung zwischen diesen Begrenzungselementen 19 und wenigstens einer der Wandungen 6 und 10 erfolgen. Die Abstützung muss dabei derart ausgestaltet sein, dass die Begrenzungselemente 19 in Umfangsrichtung verdrehbar bleiben. Hierfür kann beispielsweise wenigstens eine der Wandungen 6 und 10 eine axiale ringförmige Nut bzw. Vertiefung aufweisen, in die axiale Bereiche der Begrenzungselemente 19 eingreifen oder umgekehrt.

Um eine einwandfreie starre Verbindung zwischen einem ringförmigen Bauteil 22 und den Begrenzungselementen 19 zu gewährleisten, kann es auch zweckmäßig sein, wenn die Begrenzungselemente 19 dem vorzugsweise aus Stahl hergestellten ringförmigen Trägerelement 22 angespritzt sind. In Figur 4 ist der montierte Zustand der Bauteile 19 und 22 dargestellt.

Wie bereits erwähnt, dienen die Begrenzungselemente 19, die vorzugsweise zumindest teilweise aus Kunststoff bestehen, insbesondere zum Schutz der Dämpfungsfedern 15 bzw. der Energiespeicher 16 vor Überlastung (Impact-Momente). Die Begrenzungselemente 19 sollen die Funktion von Endanschlägen übernehmen.

Die Schutzfunktion der Begrenzungselemente 19 läuft wie folgt ab:
Der Flansch 14 komprimiert die Energiespeicher 16 bis deren Windungen bzw. zumindest die radial inneren Bereiche dieser Windungen sich berühren bzw. sich praktisch berühren. Ab diesem Zustand bzw. nach einem weiteren geringen Verdrehwinkel, zum Beispiel in der Größenordnung von 1° bis 8°, werden die Begrenzungselemente 19 in Umfangsrichtung zwischen den Flanschflügeln 13 und den an dem Bauteil 6 und/oder dem Bauteil 10 vorgesehenen Abstützbereichen 18 eingespannt. Ab diesem Verdrehzustand zwischen den Übertragungselementen 2 und 4 sind die Energiespeicher 16 und die als Begrenzungsanschläge fungierenden Abstützelemente 19 parallel geschaltet. Da die vorzugsweise zumindest teilweise aus Kunststoff hergestellten Begrenzungselemente 19 deutlich steifer sind, also eine wesentlich höhere Federrate aufweisen als die durch die Energiespeicher 16 gebildete Dämpferstufe, werden die Energiespeicher 16 vor Überlast geschützt.

Sofern die Begrenzungselemente 19 innerhalb des Torsionsschwingungsdämpfers praktisch ohne Reibungsdämpfung verdrehbar sind, kann es beim Start und Stopp der mit einem Torsiorisschwingungsdämpfer 1 ausgestatteten Brennkraftmaschine zu Klapper- bzw. Klackergeräuschen kommen. Diese Geräusche sind hauptsächlich beim Stopp der Brennkraftmaschine störend, da keine Verbrennungsgeräusche bzw. andere Geräusche das Klackern bzw. Klappern übertönen. Die durch die Begrenzungselemente 19 erzeugten Geräusche treten bei gro-βen Schwingwinkeln auf, welche ein Hin- und Herschleudern der Begrenzungselemente 19 bewirken.

Um die durch die Begrenzungselemente 19 verursachten Geräusche zu verhindern bzw. auf ein erträgliches Maß zu reduzieren, wird eine Reibungsdämpfung vorgesehen, welche durch die Verdrehung der Begrenzungselemente 19 erzeugt wird und somit die Bewegung dieser Begrenzungselemente 19 dämpft. Hierfür werden Mittel vorgesehen, die eine entsprechende Reibungsdämpfung erzeugen.

Bei der in den Figuren 1 bis 4 dargestellten Ausführungsform sind diese Mittel zur Erzeugung einer Reibungsdämpfung durch Druckfedern 25 und Reibelemente 26 gebildet. Die Druckfedern 25 und die knopfartigen bzw. napfartigen Reibelemente 26 sind axial in Sacklochöffnungen 27 der Begrenzungselemente 19 eingesetzt. Bei dem dargestellten Ausführungsbeispiel ist in jedem Endbereich eines Begrenzungselementes 19 eine derartige Sacklochöffnung 27 vorgesehen. Es kann jedoch auch eine Vielzahl von über den Umfang verteilten Sacklochöffnungen, die jeweils eine Druckfeder 25 und ein Reibelement 26 aufnehmen, vorgesehen werden. Durch die Vorspannung der Federn 25 werden die Begrenzungselemente axial gegen die Innenwandung des Antriebsflansches 6 gedrückt, wohingegen die Reibelemente 26 sich an der Deckplatte 10 axial abstützen. Dadurch wird das erforderliche Reibmoment zur Dämpfung der Bewegung der Begrenzungselemente 19 erzeugt.

Alternativ könnten die Begrenzungselemente 19 auch mit durchgehenden Ausnehmungen 27 versehen werden, wobei dann die entsprechende Druckfeder 25 axial beidseits mit einem entsprechenden Reibelement 26 zusammenwirkt. Bei einer derartigen Ausgestaltung könnten die Begrenzungselemente 19 in axialer Richtung zwischen dem Antriebsflansch 6 und der Deckplatte 10 unverspannt bzw. axial begrenzt verlagerbar aufgenommen sein.

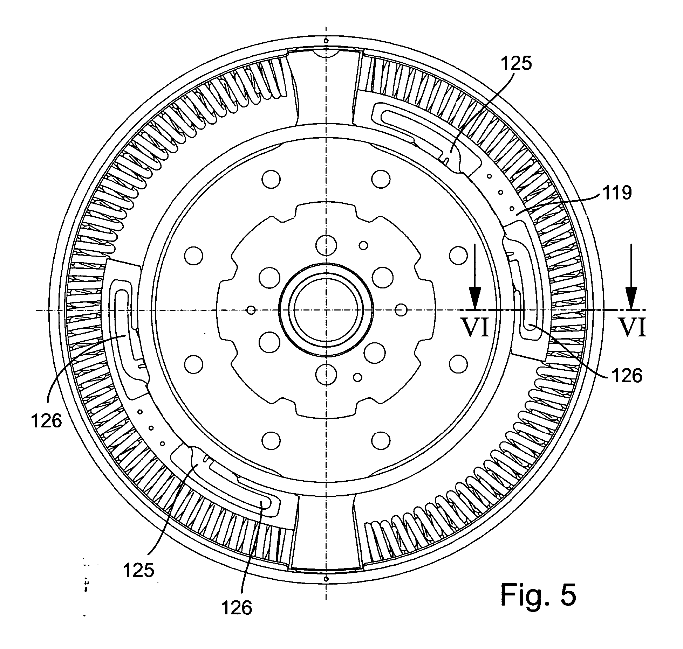

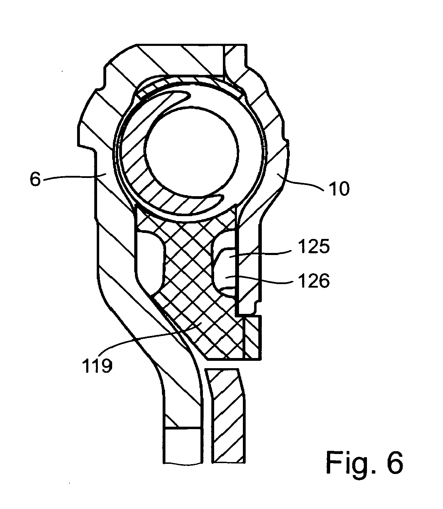

Bei der in den Figuren 5 bis 8 dargestellten Ausführungsform sind anstatt von Druckfedern 25 Federbleche 125 vorgesehen, welche in Umfangsrichtung verlaufende, axial elastische Flügel 126 besitzen. Bei dem dargestellten Ausführungsbeispiel werden die Federbleche 125 axial zwischen den Begrenzungselementen 119 und der Deckplatte 10 derart angeordnet, dass die Federflügel 126 axial verspannt werden, wodurch die Begrenzungselemente 119 axial gegen die Innenwandung des Antriebsflansches 6 gedrückt werden, so dass bei einer Verdrehung der Begrenzungselemente 119 eine Reibungsdämpfung entsteht. Die axial elastischen Flügel 126 können sich entweder unmittelbar oder unter Zwischenlegung eines Reibelementes an der Deckplatte 10 axial abstützen. Zweckmäßig kann es sein, wenn die Endbereiche der axial elastischen Flügel 126 mit einem Reib- oder Gleitmaterial versehen werden. Dieses Reibmaterial kann entweder durch ein eigenes Bauteil oder durch ein aufgespritztes Material gebildet sein.

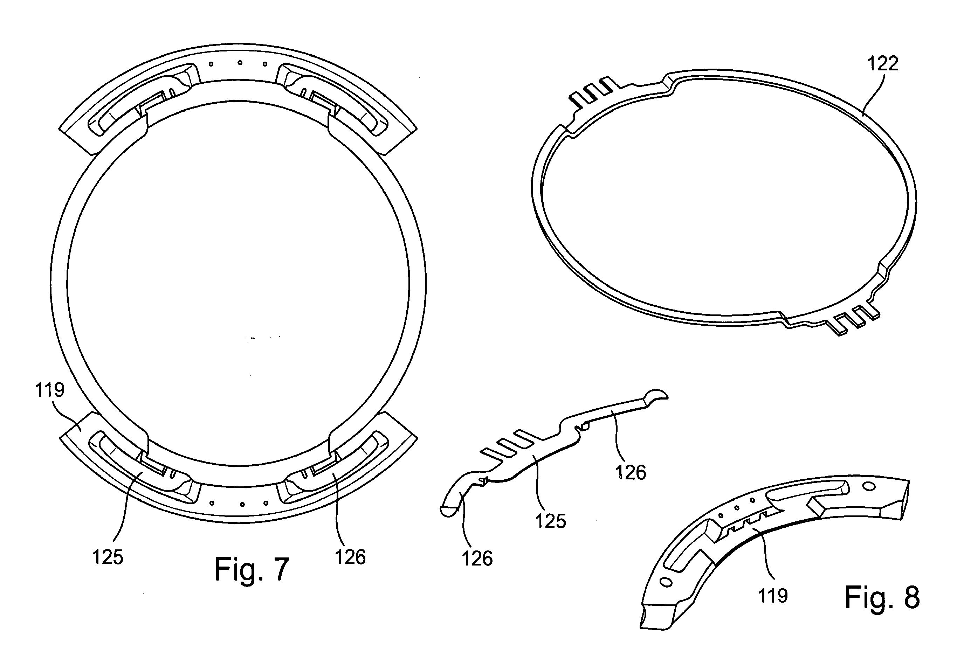

Aus der Explosionszeichnung gemäß Figur 8 ist erkennbar, dass die Federbleche 125 in ähnlicher Weise wie das ringförmige Verbindungselement 122 mit den Begrenzungselementen 119 mittels einer radialen Steckverbindung gekoppelt werden können.

In vorteilhafter Weise können die Begrenzungselemente 19 bzw. 119 auch mittels eines Verbindungsringes 22 bzw. 122 drehgekoppelt sein, der nicht nur die Synchronfunktion für die Verdrehung der Begrenzungselemente 19 bzw. 119 übernimmt, sondern auch die zur Erzeugung einer Reibungsdämpfung erforderliche Axialkraft aufbringt. Hierfür kann beispielsweise ein Drahtring verwendet werden, der zumindest innerhalb des umfangsmäßigen Erstreckungsbereiches der Begrenzungselemente 19 bzw. 119 entweder axiale oder radiale Wellungen aufweist, die axial verspannt sind und somit die entsprechenden Begrenzungselemente 19 bzw. 119 axial beaufschlagen. Sofern ein derartiger Ring bzw. Drahtring 22 bzw. 122 axiale Wellungen aufweist, können diese in einer axialen, nutförmigen Aufnahme der Begrenzungselemente 19 bzw. 119 zumindest teilweise aufgenommen sein.

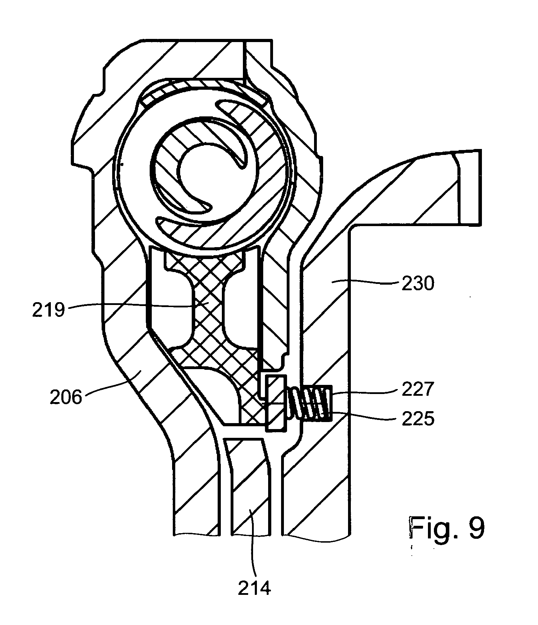

Bei der in Figur 9 dargestellten Ausführungsform ist die mit dem Flansch 214 drehfest verbundene, abtriebsseitige Sekundärmasse 230 gezeigt, welche unter Zwischenlegung einer Kupplungsscheibe mit dem Gehäuse einer Reibungskupplung verbindbar ist. Die Sekundärmasse 230 bildet eine Reibfläche, die mit einem Reibbelag der entsprechenden Kupplungsscheibe zusammenwirkt. Bei der Ausführungsform gemäß Figur 9 sind die Druckfedern, welche axial auf die Begrenzungselemente 219 einwirken, an der Sekundärmasse 203 abgestützt. Hierfür weist die Sekundärmasse 230 Ausnehmungen 227 auf, in denen die Druckfedern 225 zumindest teilweise axial aufgenommen sind. Durch die axiale Vorspannung der Federn 225 werden die Begrenzungselemente 219 wiederum gegen die Innenwandung des Antriebsflansches 206 gedrückt.

Bei der in Figur 2 im Schnitt dargestellten Ausführungsform könnten auch die Federn 25 und die von diesen beaufschlagten Reibelemente 26 derart angeordnet und ausgestaltet werden, dass die Reibelemente 26 anstatt sich an der Deckplatte 10 abzustützen, an einer Sekundärmasse, zum Beispiel 230 gemäß Figur 9, abstützen.

In den Figuren 11 bis 13 sind verschiedene Anordnungsalternativen für Begrenzungselemente 419, 519, 619, 719 dargestellt.

Bei der Ausführungsform gemäß Figur 10 sind die Begrenzungselemente 419 in ähnlicher Art und Weise angeordnet, wie dies in Zusammenhang mit den Figuren 1 bis 9 beschrieben wurde.

Bei der Ausgestaltung gemäß Figur 11 sind die Begrenzungselemente 519 axial seitlich der Energiespeicher 616 angeordnet.

Bei der Ausführungsform gemäß Figur 12 sind die Begrenzungselemente 619 innerhalb der Energiespeicher 616 angeordnet. Aus den Figuren 10 und 12 ist ersichtlich, dass die Energiespeicher 416 bzw. 616 zumindest aus zwei ineinander geschachtelten Schraubendruckfedern gebildet sind. Sofern bei der Ausführungsform, zum Beispiel gemäß Figur 12, die Innenfeder entfällt, können die Begrenzungselemente 619 entsprechend größer im Durchmesser ausgelegt werden.

Bei der Ausgestaltung gemäß Figur 13 sind die segmentförmigen Begrenzungselemente 719 radial außerhalb der Energiespeicher 716 angeordnet.

In den Figuren 10 bis 13 ist auch die mit dem die Energiespeicher beaufschlagenden Flansch verbundene Sekundärmasse ersichtlich. In den Figuren 11 und 12 ist darüber hinaus die auf der Sekundärmasse befestigte Kupplungseinheit, bestehend aus Kupplungsscheibe und Reibungskupplung, gezeigt.

Besonders zweckmäßig kann es sein, wenn, wie bereits erwähnt, die zwischen den Übertragungselementen, zum Beispiel 2 und 4 gemäß den Figuren 1 und 2, wirksamen Energiespeicher durch wenigstens zwei ineinander geschachtelte Schraubendruckfedern gebildet sind, wobei die endgültige Verdrehbegrenzung zwischen den beiden Übertragungselementen 2 und 4 durch auf Block gehen der inneren Schraubendruckfeder bewirkt wird. Die Blocklänge der Innenfeder ist dabei vorzugsweise derart bemessen, dass die Begrenzungselemente, zum Beispiel 19, eine ausreichend große Dämpfungswirkung entfaltet haben, um gemeinsam mit dem auf Block gehen der inneren Feder die äußere Schraubendruckfeder gegen Überbelastung zu schützen. Die äußere Schraubendruckfeder kann dabei in vorteilhafter Weise entsprechend der Lehre der WO 99/49234 ausgebildet sein. Eine derartige Schraubendruckfeder hat den Vorteil, dass durch Aufeinandergleiten der sich berührenden Windungen eine hohe Reibungsdämpfung erzielt wird.

Für manche Anwendungsfälle kann es jedoch auch zweckmäßig sein, wenn der jeweilige Energiespeicher lediglich durch die vorerwähnte äußere Schraubendruckfeder gebildet ist und somit die endgültige Verdrehbegrenzung zwischen dem antriebsseitigen und dem abtriebsseitigen Übertragungselement durch die kombinierte Wirkung der Schraubendruckfedern und der Begrenzungselemente gewährleistet wird.

Für manche Anwendungsfälle kann auch die kombinierte Wirkung der äußeren Schraubendruckfeder und der auf Block gehenden inneren Schraubendruckfeder ausreichen, um Beschädigungen innerhalb des Torsionsschwingungsdämpfers zu vermeiden, insbesondere eine Überbelastung der äußeren Schraubendruckfeder zu verhindern. In solchen Fällen kann gegebenenfalls auf Begrenzungselemente verzichtet werden.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1: Torsionsschwingungsdämpfer
- 2: Übertragungselement
- 3: Antriebsseitige Schwungmasse
- 4: Abtriebsseitiges Übertragungselement
- 5: Flanschartiges Bauteil
- 6: Antriebsflansch
- 7: Axialer Ansatz
- 8: Verschraubungsöffnungen
- 9: Axialer Ansatz
- 10: Deckplatte
- 11: Ringförmiger Raum
- 12: Dämpfungseinrichtung
- 13: Radiale Flügel bzw. Ausleger
- 14: Flansch
- 15: Schraubendruckfedern
- 16: Energiespeicher
- 17: ---
- 18: Abstütz- bzw. Beaufschlagungsbereiche
- 19: Begrenzungselemente
- 20: Angepasster Bereich
- 21: Verschleißschutz
- 22: Ringförmiges Bauteil
- 23: Radiale Zungen
- 24: Radiale Ausnehmungen
- 25: Druckfedern
- 26: Reibelemente
- 27: Durchgehende Ausnehmungen
- 119: Begrenzungselemente
- 122: Ringförmiges Bauteil
- 125: Federbleche
- 126: elastische Flügel
- 203: Sekundärmasse
- 206: Antriebsflansch
- 214: Flansch
- 219: Begrenzungselemente
- 225: Federn
- 227: Ausnehmungen
- 230: abtriebsseitige Sekundärmasse
- 416: Energiespeicher
- 419: Begrenzungselement
- 519: Begrenzungselement
- 616: Energiespeicher
- 619: Begrenzungselement
- 716: Energiespeicher
- 719: Begrenzungselement

## Patentansprüche

1. Torsionsschwingungsdämpfer mit einem antriebsseitigen und einem abtriebsseitigen Übertragungselement, die entgegen einer zwischen diesen vorgesehenen Dämpfungseinrichtung mit in Umfangsrichtung wirksamen Energiespeichern zueinander verdrehbar sind, wobei die Übertragungselemente Beaufschlagungsbereiche für die Energiespeicher aufweisen und radial innerhalb oder radial außerhalb der Energiespeicher wenigstens ein Energie absorbierendes, zwischen an den Übertragungselementen vorgesehenen Abstützbereichen einspannbares Begrenzungselement vorgesehen ist, welches gegenüber beiden Übertragungselementen begrenzt verdrehbar ist und zur Begrenzung der durch die Dämpfungseinrichtung ermöglichten Relativverdrehung zwischen den Übertragungselementen dient.

2. Torsionsschwingungsdämpfer nach Anspruch 1, **dadurch gekennzeichnet, dass** das Begrenzungselement in Umfangsrichtung gekrümmt und länglich ausgebildet ist.

3. Torsionsschwingungsdämpfer nach Anspruch 1 oder 2, **dadurch gekennzeichnet, dass** wenigstens zwei in Umfangsrichtung sich erstreckende Energiespeicher vorgesehen sind, denen jeweils mindestens ein Begrenzungselement zugeordnet ist.

4. Torsionsschwingungsdämpfer nach einem der Ansprüche 1 bis 3, **dadurch gekennzeichnet, dass** das wenigstens eine Begrenzungselement kurz vor oder beim auf Block gehen des Energiespeichers zwischen den beiden Übertragungselementen wirksam wird.

5. Torsionsschwingungsdämpfer nach einem der Ansprüche 1 bis 4, **dadurch gekennzeichnet, dass** zumindest über einen geringen Relativverdrehwinkel zwischen den Übertragungselementen die Energiespeicher und das wenigstens eine Begrenzungselement gleichzeitig eine elastische Verformung erfahren.

6. Torsionsschwingungsdämpfer nach Anspruch 5, **dadurch gekennzeichnet, dass** der Verdrehwinkel in der Größenordnung von 1° bis 10° beträgt.

7. Torsionsschwingungsdämpfer nach Anspruch 5 oder 6, **dadurch gekennzeichnet, dass** zumindest ein Energiespeicher durch eine Schraubendruckfeder gebildet ist und zumindest über einen Teilbereich des geringen Relativverdrehwinkels die Federwindungen sich bereits berühren, jedoch durch Aufeinandergleiten der Windungen ein weiterer Kompressionsweg der Feder ermöglicht ist.

8. Torsionsschwingungsdämpfer nach Anspruch 7, **dadurch gekennzeichnet, dass** der Energiespeicher zumindest durch zwei Schraubendruckfedern, nämlich einer äußeren und einer inneren Schraubendruckfeder, gebildet ist, wobei eine dieser Schraubendruckfedern den weiteren durch Aufeinandergleiten der Windungen ermöglichten Kompressionsweg aufweist und die andere Feder bei auf Block gehen der Windungen eine feste Blocklänge aufweist, wobei diese andere Feder innerhalb des möglichen weiteren Kompressionsweges der einen Feder auf Block geht, wodurch die Relativverdrehung zwischen den Übertragungselementen begrenzt wird.

9. Torsionsschwingungsdämpfer nach Anspruch 8, **dadurch gekennzeichnet, dass** die Innenfeder eine feste Blocklänge aufweist.

10. Torsionsschwingungsdämpfer nach einem der Ansprüche 1 bis 9, **dadurch gekennzeichnet, dass** die Begrenzungselemente Kunststoffanschläge bilden.

11. Torsionsschwingungsdämpfer nach Anspruch 10, **dadurch gekennzeichnet, dass** die Begrenzungselemente zumindest teilweise aus einem Duroplast bestehen.

12. Torsionsschwingungsdämpfer nach einem der Ansprüche 1 bis 11, **dadurch gekennzeichnet, dass** die Begrenzungselemente zumindest teilweise aus einem Thermoplast bestehen.

13. Torsionsschwingungsdämpfer nach einem der Ansprüche 1 bis 12, **dadurch gekennzeichnet, dass** die Begrenzungselemente zumindest teilweise aus einem harten Elastomer bestehen.

14. Torsionsschwingungsdämpfer nach einem der Ansprüche 1 bis 13, **dadurch gekennzeichnet, dass** mehrere Begrenzungselemente über den Umfang verteilt vorgesehen sind, die miteinander drehgekoppelt sind.

15. Torsionsschwingungsdämpfer nach Anspruch 14, **dadurch gekennzeichnet, dass** die Drehkoppelung zwischen den Begrenzungselementen mittels wenigstens eines ringartigen Bauteils erfolgt.

16. Torsionsschwingungsdämpfer nach einem der Ansprüche 1 bis 15, **dadurch gekennzeichnet, dass** mehrere über den Umfang verteilte Begrenzungselemente vorgesehen sind, die untereinander fliehkraftmäßig abgestützt sind.

17. Torsionsschwingungsdämpfer nach einem der Ansprüche 14 bis 16, **dadurch gekennzeichnet, dass** die Begrenzungselemente zumindest annähernd gleichmäßig über den Umfang verteilt sind.

18. Torsionsschwingungsdämpfer nach einem der Ansprüche 14 bis 17, **dadurch gekennzeichnet, dass** die Begrenzungselemente über wenigstens ein ringförmiges Bauteil untereinander drehgekoppelt und fliehkraftmäßig abgestützt sind.

19. Torsionsschwingungsdämpfer nach einem der Ansprüche 1 bis 18, **dadurch gekennzeichnet, dass** die Begrenzungselemente Bestandteil einer Reibeinrichtung sind.

20. Torsionsschwingungsdämpfer nach einem der Ansprüche 1 bis 19, **dadurch gekennzeichnet, dass** die Begrenzungselemente gleichzeitig als Reibelement dienen.

21. Torsionsschwingungsdämpfer nach Anspruch 19 oder 20, **dadurch gekennzeichnet, dass** wenigstens ein Begrenzungselement zur Erzeugung einer Reibungsdämpfung in axialer Richtung kraftbeaufschlagt ist.

22. Torsionsschwingungsdämpfer nach einem der Ansprüche 1 bis 21, **dadurch gekennzeichnet, dass** er Bestandteil eines zumindest zwei zueinander verdrehbare Massen aufweisenden Schwungrades ist, und jeweils eines der Übertragungselemente zumindest Bestandteil einer der beiden Massen ist oder wenigstens mit einer solchen drehverbunden ist.

23. Torsionsschwingungsdämpfer nach einem der Ansprüche 1 bis 22, **dadurch gekennzeichnet, dass** eines der Übertragungselemente durch wenigstens zwei axial beabstandete Seitenwandungen und das andere Übertragungselement durch wenigstens ein zwischen diesen beiden Seitenwandungen angeordnetes, flanschartiges Bauteil gebildet ist.

24. Torsionsschwingungsdämpfer nach Anspruch 23, **dadurch gekennzeichnet, dass** das antriebsseitige Übertragungselement die beiden Seitenwandungen aufweist und das abtriebsseitige Übertragungselement das flanschartige Bauteil besitzt.

25. Torsionsschwingungsdämpfer nach Anspruch 23 oder 24, **dadurch gekennzeichnet, dass** wenigstens ein Begrenzungselement an wenigstens einer der Seitenwandungen und/oder am flanschartigen Bauteil fliehkraftmäßig abgestützt ist.

26. Torsionsschwingungsdämpfer nach wenigstens einem der vorhergehenden Ansprüche, **dadurch gekennzeichnet, dass** er eine ringförmige Kammer aufweist, in der die Energiespeicher enthalten sind und die zumindest teilweise mit einem viskosen Medium gefüllt ist, wobei die Begrenzungselemente radial innerhalb und angrenzend an die Energiespeicher vorgesehen sind.
